# EUROPEAN PATENT APPLICATION

(11) **EP 4 322 245 A2**
(43) Date of publication of application: **14.02.2024**
(21) Application number: 23187340.7
(22) Date of filing: 24.07.2023
(51) Int. Cl.: H01M 4/13, H01M 4/134, H01M 4/66, H01M 4/70, H01M 10/052, H01M 10/0525, H01M 10/0569, H01M 10/0585, H01M 10/056, H01M 4/02

(54) **NEGATIVE ELECTRODE FOR RECHARGEABLE BATTERY AND RECHARGEABLE BATTERY INCLUDING THE SAME**

(30) Priority: 11.08.2022 KR 20220100759
(71) Applicant: Samsung SDI Co., Ltd., Yongin-si, Gyeonggi-do 17084 (KR)
(72) Inventor: KIM, Eun Jung, 17084 Yongin-si (KR)
(74) Representative: Marks & Clerk LLP

(57) **Abstract**

A negative electrode for a rechargeable battery and a rechargeable battery including the same, the negative electrode includes a metal substrate including holes therein; a protective layer on the metal substrate, the protective layer including through holes therein overlying and in fluid communication with the holes in the metal substrate; and an electrolyte membrane including a liquid electrolyte layer and a solid electrolyte layer, the liquid electrolyte layer being in the holes and the solid electrolyte layer covering the protective layer and the through holes.

## Description

### BACKGROUND

### 1. Field

Embodiments relate to a negative electrode for a rechargeable battery and a rechargeable battery including the same.

### 2. Description of the Related Art

A lithium-ion battery may be used by increasing a Ni content in a positive electrode to 80 to 90% for high capacity, but considering theoretical capacity of a layered positive active material, 70% or more of lithium may be used, so a limit has already been reached in increasing specific capacity of a positive electrode.

The above information disclosed in this Background section is only for enhancement of understanding of the background, and therefore it may contain information that does not form the prior art that is already known in this country to a person of ordinary skill in the art.

### SUMMARY

The embodiments may be realized by providing a negative electrode for a rechargeable battery, the negative electrode including a metal substrate including holes therein; a protective layer on the metal substrate, the protective layer including through holes therein overlying and in fluid communication with the holes in the metal substrate; and an electrolyte membrane including a liquid electrolyte layer and a solid electrolyte layer, the liquid electrolyte layer being in the holes and the solid electrolyte layer covering the protective layer and the through holes.

A planar shape of each hole may be circular or polygonal.

Each of the holes may include a plurality of smaller sub-holes.

The liquid electrolyte layer may include a lithium salt dissolved in a solvent, the solvent including ethylene carbonate, ethyl methyl carbonate, dimethyl carbonate, propylene carbonate, or fluoroethylene carbonate.

The solid electrolyte layer may include a polyethylene oxide, a lithium lanthanum zirconium oxide, or argyrodite Li₆PS₅Cl.

The protective layer may include a polyimide, a polypropylene, a polyethylene, a polyethylene terephthalate, a polyvinylidene fluoride, or a phenylpropanolamine.

The protective layer may have a thickness of 0.2 µm to 100 µm.

The metal substrate may include aluminium.

The metal substrate may further include copper such that a pair of aluminium layers sandwich a copper layer therebetween.

The holes may be in the pair of aluminium layers.

The holes may extend completely through the pair of aluminium layers to expose the copper layer.

A thickness of the copper layer may be smaller than or equal to a thickness of each of the pair of aluminium layers.

The embodiments may be realized by providing a rechargeable battery including the negative electrode according to an embodiment; and a positive electrode overlapping the negative electrode.

The positive electrode may include an aluminium metal substrate, and an active material layer on the aluminium metal substrate.

The rechargeable battery may further include a separator between the negative electrode and the positive electrode.

At least some of the above and other features of the invention are set out in the claims.

### BRIEF DESCRIPTION OF THE DRAWINGS

Features will be apparent to those of skill in the art by describing in detail embodiments with reference to the attached drawings in which:
FIG. 1 illustrates a schematic perspective view of a negative electrode for a rechargeable battery according to an embodiment.
FIG. 2 illustrates a cross-sectional view taken along line II-II of FIG. 1.
FIG. 3 and FIG. 4 illustrate schematic top plan views of a hole included in a negative electrode for a rechargeable battery according to another embodiment.
FIG. 5 and FIG. 6 illustrate drawings explaining volume expansion of LiₓAl according to an embodiment.
FIG. 7 and FIG. 8 illustrate cross-sectional views of a negative electrode according to another embodiment.
FIG. 9 and FIG. 10 illustrate schematic drawings of an electrode assembly according to another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout.

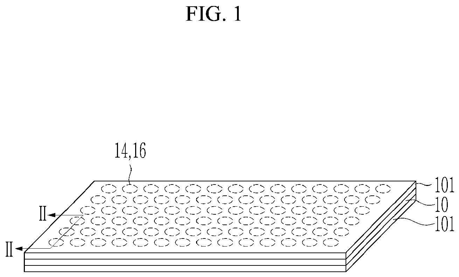

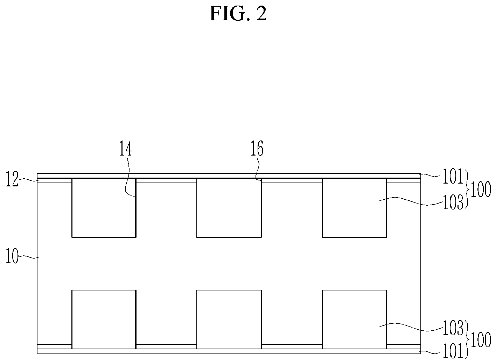

FIG. 1 illustrates a schematic perspective view of a negative electrode for a rechargeable battery according to an embodiment, FIG. 2 illustrates a cross-sectional view taken along line II-II of FIG. 1, and FIG. 3 and FIG. 4 illustrate schematic top plan views of holes included in a negative electrode for a rechargeable battery according to embodiments.

As shown in FIG. 1 and FIG. 2, a negative electrode for a rechargeable battery according to an embodiment includes a metal substrate 10, a protective layer 12 on the metal substrate 10, holes 14 in the metal substrate 10, and an electrolyte membrane 100 covering (and in) the holes 14.

The metal substrate 10 may be made of, e.g., aluminium, which is inexpensive and easy to process.

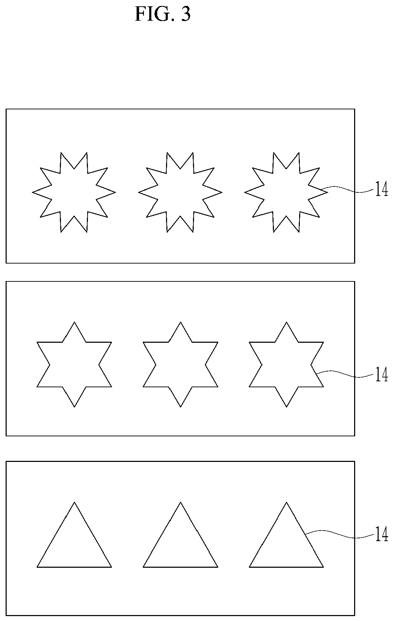

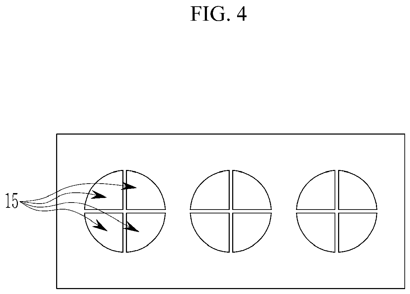

The holes 14 may be in the metal substrate 10. In an implementation, a planar shape of the hole 14 (e.g., a shape in a plan view) may be, e.g., circular (e.g., as illustrated in FIG. 1) or polygonal (e.g., as illustrated in FIG. 3). In an implementation, the holes 14 may be formed as one, e.g., individually, with a desired size. In an implementation, as illustrated in FIG. 4, each of the holes 14 may be divided into a plurality of smaller sub-holes 15.

The size of each hole 14 may be determined according to a volume of LiₓAl formed by reaction between aluminium of the metal substrate 10 and lithium of an electrolyte layer.

A width (or diameter) D of each hole 14 may be, e.g., 0.5 µm to 2,000 µm, and an area thereof may be, e.g., 10% to 90% of an area of the metal substrate 10. If the area occupied by the holes 14 were to be less than 10%, capacity implementation could be small or an expansion volume could be large. If the area occupied by the holes 14 were to exceed 90%, structural safety of the substrate and an electrode plate could deteriorate.

In an implementation, a depth of each hole 14 may be 1/2 or more of a thickness of the metal substrate 10. In an implementation, a depth of each hole 14 may be less than 1/2 the thickness of the metal substrate 10. In an implementation, the holes 14 may not pass all the way through the metal substrate 10.

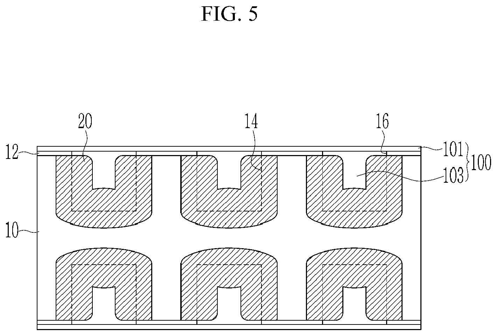

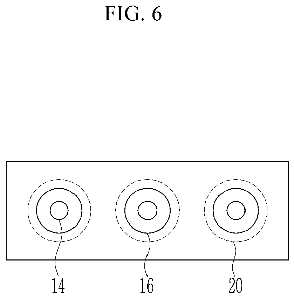

FIG. 5 and FIG. 6 illustrate drawings for explaining volume expansion of LiₓAl according to an embodiment.

When the holes 14 are formed, even if volume expansion were to occur during generation of LiₓAl 20, e.g., as shown in FIG. 5 and FIG. 6, the volume expansion may be inside the holes 14, and it is possible to minimize a change in thickness of a battery cell due to the volume expansion. In an implementation, the holes 14 may be in the metal substrate 10 at uniform intervals and sizes, and it is possible to prevent non-uniform and abnormal stress from occurring.

In an implementation, the holes 14 may be formed in the metal substrate, swelling force of a cell may be reduced or made uniform, and a structure of a module pack may be simplified and formed at a low cost.

In an implementation, the holes 14 may be uniformly distributed and the stress may be controlled inside the holes, a lifespan may be improved, and an effect of improving resistance may be expected by removing unnecessary interfacial reaction and interfacial non-uniformity.

Referring back to FIG. 1 and FIG. 2, The protective layer 12 may be made of or include a material that is chemically stable and is difficult to transmit lithium, e.g., polyimide (PI), polypropylene (PP), polyethylene (PE), polyethylene terephthalate (PET), polyvinylidene fluoride (PVDF), or phenylpropanolamine (PPA). In an implementation, the protective layer 12 may have a thickness of, e.g., 0.2 µm to 100 µm. As used herein, the term "or" is not an exclusive term, e.g., "A or B" would include A, B, or A and B.

The protective layer 12 may include through holes 16 therein. The through holes 16 may overlie and may be in fluid communication with the holes 14 (e.g., each through hole 16 in the protective layer 12 may overlie and be in fluid communication with one corresponding hole 14 in the metal substrate 10. In an implementation, planar shapes of the through holes 16 and the holes 14 may be the same.

The electrolyte membrane 100 includes a liquid electrolyte layer 103 that fills the holes 14, and a solid electrolyte layer 101 that covers the holes 14, e.g., may be on the entire (outer) surface of the protective layer 12.

The liquid electrolyte layer 103 may include a mixture in which a lithium salt is dissolved in a solvent. In an implementation, the solvent may include, e.g., ethylene carbonate (EC), ethyl methyl carbonate (EMC), dimethyl carbonate (DMC), propylene carbonate (PC), or fluoroethylene carbonate (FEC). In an implementation, the solid electrolyte layer 101 may include, e.g., a polymer material, a ceramic material, or a sulfide material. In an implementation, the solid electrolyte layer 101 may include, e.g., a polyethylene oxide (PEO), a lithium lanthanum zirconium oxide (LLZO), or argyrodite (Li₆PS₅Cl).

The liquid electrolyte layer 103 may be in the holes 14. In an implementation, when the battery is driven, lithium in the electrolyte and aluminium, which is a metal base material, may react to form the LiₓAl 20 in the holes 14. In an implementation, depending on the charging and discharging of the battery, the LiₓAl may fill 0% to 100% of a volume of the holes 14. The volume expansion of the LiₓAl may proceed into the hole 14 uniformly formed, and the volume expansion of the LiₓAl may locally proceed, so that a phenomenon that causes cracks by being non-uniformly positioned or excessively protruding may not occur, so uniform charging and discharging may be performed.

In an implementation, an unreacted liquid electrolyte may be pushed out of the holes 14 due to the volume expansion of the LiₓAl, an amount thereof may not be large and the liquid electrolyte may be uniformly spread inside the battery cell due to capillary action, and cracks due to non-uniform protruding do not occur, so uniform charging and discharging may be performed. The solid electrolyte layer 101 may entirely cover the holes 14 and the protective layer 12, and may have a thickness of 1 µm to 200 µm. The solid electrolyte layer 101 may be in contact with the liquid electrolyte layer 103 exposed in the holes 14.

As described above, as in the embodiment, by forming the holes 14 in the metal substrate 10 and filling liquid electrolyte therein, even if the lithium in the electrolyte were to react with aluminium to generate a salt and the volume expansion occurs, the swelling phenomenon of the battery may not occur.

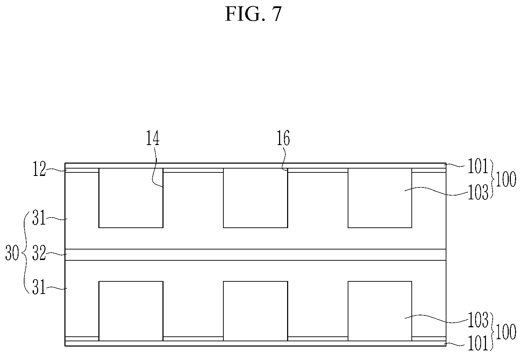

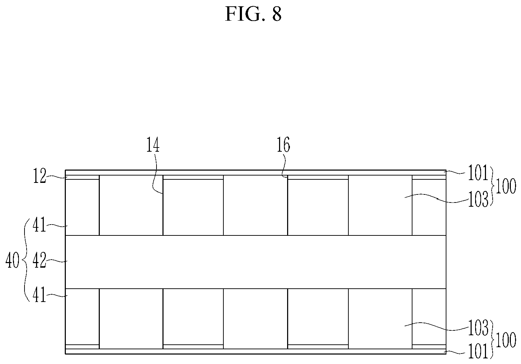

FIG. 7 and FIG. 8 illustrate cross-sectional views of a negative electrode according to other embodiments.

As shown in FIG. 7 and FIG. 8, the negative electrode according to the other embodiments may be mostly the same as the negative electrode of FIG. 1, and only other parts may be described in detail.

The negative electrode shown in FIG. 7 may include a protective layer 12 on a metal substrate 30, holes 14 in the metal substrate 30, and an electrolyte membrane 100 covering (and filling) the holes 14. The electrolyte membrane 100 may include a liquid electrolyte layer 103 and a solid electrolyte layer 101.

In an implementation, the metal substrate 30 may be formed by stacking a plurality of metal substrates, and may include an aluminium layer 31 and a copper layer 32.

In an implementation, in the metal substrate 30, a pair of aluminium layers 31 may be at both sides of the copper layer 32 at the center (e.g., the copper layer 32 may be between the pair of aluminium layers 31. In an implementation, the aluminium layers 31 may contact the electrolyte membrane 100.

The copper layer 32 may have the same thickness as a thickness of the aluminium layers 31, or may have a thinner thickness than the thickness of the aluminium layers 31.

In an implementation, as shown in FIG. 8, aluminium layers 41 and a copper layer 42 of a metal substrate 40 may each have the same thickness. In an implementation, holes 14 may pass (e.g., completely) through the aluminium layers 41, so that (e.g., a part of) the copper layer 42 may be exposed in the holes 14.

The negative electrode according to the embodiment described above may be used in an electrode assembly, and hereinafter, an electrode assembly according to an embodiment will be described with reference to the drawings.

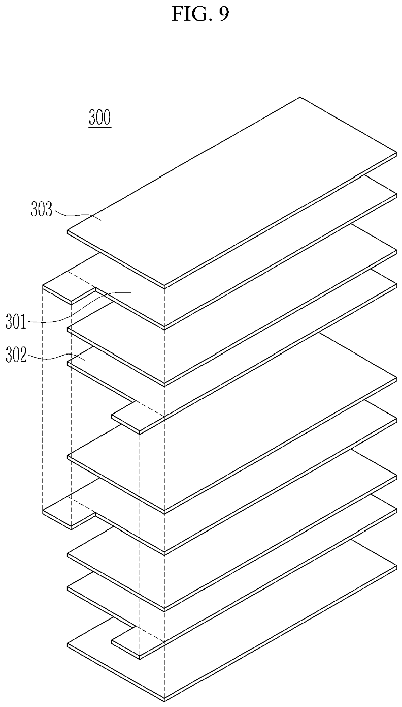

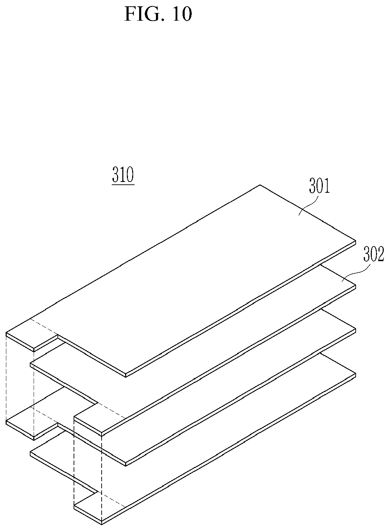

FIG. 9 and FIG. 10 illustrate schematic drawings of an electrode assembly according to another embodiment.

As shown in FIG. 9, an electrode assembly 300 according to an embodiment may be a stacked electrode assembly 300 in which a negative electrode 301 and a positive electrode 302 are repeatedly stacked with a separator 303 therebetween.

The separator 303 may be a polymer film through which lithium ions may pass. In an implementation, the separator 303 may include, e.g., polyethylene, polypropylene, polyvinylidene fluoride, or a multifilm of two or more layers thereof, or a mixed multifilm such as a polyethylene/polypropylene double-layered separator, a polyethylene/polypropylene/polyethylene triple-layered separator, or a polypropylene/polyethylene/polypropylene triple-layered separator may be used as the separator 303.

The negative electrode 301 may have the structure of the negative electrode shown in FIG. 1, e.g., may include the metal substrate 10 made of aluminium, the protective layer 12 on the metal substrate 10, the holes 14 in the metal substrate 10, and the electrolyte membrane 100 covering the holes 14.

The positive electrode 302 may include an electrode part in which an active material is coated to or on a current collector made of the metal substrate made of aluminium (Al), and an uncoated region in which the metal substrate is exposed because the active material is not coated.

In an implementation, the active material of the positive electrode 302 may include, e.g., a compound (lithiated intercalation compound) capable of reversibly intercalating and deintercalating lithium ions. In an implementation, the active material of the positive electrode may include a composite oxide of lithium and a metal such as cobalt, manganese, nickel, or a combination thereof. A content of the active material of the positive electrode may be, e.g., 90 wt% to 98 wt%, based on a total weight of the active material layer of the positive electrode.

In an implementation, the active material layer of the positive electrode may further include a binder and a conductive material. In an implementation, a content of each of the binder and the conductive material may be, e.g., 1 wt% to 5 wt%, based on the total weight of the active material layer of the positive electrode.

The binder may help attach particles of the active material of the positive electrode to each other, and may help attach the active material of the positive electrode to the metal substrate that is a current collector well. In an implementation, the binder may include, e.g., polyvinyl alcohol, carboxy methyl cellulose, hydroxypropyl cellulose, diacetylcellulose, polyvinyl chloride, carboxylated polyvinyl chloride, polyvinylidene fluoride, a polymer containing ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like. The conductive material may help give conductivity to the electrode, and may include a suitable material that does not trigger a chemical change in the configured battery.

In an implementation, a plurality of uncoated regions of the positive electrode 302 and the negative electrode 301 may be electrically connected to the same polarity to be electrically connected to an external terminal. In an implementation, the uncoated region of the positive electrode 302 and the uncoated region of the negative electrode 301 may protrude in the same direction, or may protrude in opposite directions and be spaced apart from each other.

The separator 303 may be larger than the negative electrode 301 and the positive electrode 302 to protrude further out than the negative electrode 301 and the positive electrode 302.

In an implementation, in the electrode assembly according to the embodiments, the solid electrolyte layer may serve as a separator, the separator may be omitted, and the negative electrode 301 and the positive electrode 302 may be alternately stacked, as in the electrode assembly 310 of FIG. 10.

The electrode assemblies 300 and 310 may be accommodated in a pouch or can-shaped prismatic case to be used as a rechargeable battery.

By way of summation and review, when a Ni content is increased, an amount of Li usage at a lower voltage may be increased, and available Li may not be increased, so that when capacity is further increased, crystal structure instability, gas generation due to residual lithium on a surface, and lifespan reduction could occur.

Energy density may be improved through improvement of positive and negative electrode active materials. However, expansion of a cell and increase in side reactions due to graphite Si contained in the active material could occur, cell performance may deteriorate and safety may be weakened, so it may not be easy to improve the energy density.

In order to improve the safety of the cell while increasing the energy density, development of an all-solid-state battery in which an entire constituent material of a battery is applied as a solid by changing an electrolyte to which an organic solvent is applied to a solid, has been considered.

When such a solid electrolyte is used, dendrite growth of lithium metal along pores and crystal interfaces of the solid electrolyte and expansion during charging of a metal negative electrode could occur.

Aluminium has a specific capacity five times higher than that of graphite, and is an ultra-low-cost material that may be easier to handle than lithium metal. When it is used as a material of a negative electrode, an expansion rate thereof may be high like Si, so it may be difficult to handle volume change during charging and discharging, and cracks could occur and non-uniform charging may occur.

One or more embodiments may provide a negative electrode for a rechargeable battery and a rechargeable battery including the same in which, while aluminium is used as a negative electrode material, cracks due to volume change during charging and discharging do not occur, and uniform charging and discharging are possible.

The negative electrode according to the embodiment may help reduce a production cost of a rechargeable battery by using aluminium, which is easy to work with, as a metal base material.

In addition, even if volume expansion were to occur due to generation of a lithium salt, it is possible to minimize a change in thickness of a battery cell due to the volume expansion and to prevent occurrence of non-uniform and abnormal stress.

The stress during charging and discharging may be controlled due to a hole, a lifespan may be improved, and an effect of improving resistance may be expected by removing unnecessary interfacial reaction and interfacial non-uniformity.

In addition, swelling force of a rechargeable battery may be reduced or made uniform, and a structure of a module pack may be simplified and formed at a low cost.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A negative electrode for a rechargeable battery, the negative electrode comprising:
a metal substrate including holes therein;
a protective layer on the metal substrate, the protective layer including through holes therein overlying and in fluid communication with the holes in the metal substrate; and
an electrolyte membrane including a liquid electrolyte layer and a solid electrolyte layer, the liquid electrolyte layer being in the holes and the solid electrolyte layer covering the protective layer and the through holes.

2. The negative electrode for the rechargeable battery as claimed in claim 1, wherein a planar shape of each hole is circular or polygonal.

3. The negative electrode for the rechargeable battery as claimed in claim 2, wherein each of the holes includes a plurality of smaller sub-holes.

4. The negative electrode for the rechargeable battery as claimed in any one of claims 1 to 3, wherein the liquid electrolyte layer includes a lithium salt dissolved in a solvent, the solvent including ethylene carbonate, ethyl methyl carbonate, dimethyl carbonate, propylene carbonate, or fluoroethylene carbonate.

5. The negative electrode for the rechargeable battery as claimed in any one of claims 1 to 4, wherein the solid electrolyte layer includes a polyethylene oxide, a lithium lanthanum zirconium oxide, or argyrodite Li₆PS₅Cl.

6. The negative electrode for the rechargeable battery as claimed in any one of claims 1 to 5, wherein the protective layer includes a polyimide, a polypropylene, a polyethylene, a polyethylene terephthalate, a polyvinylidene fluoride, or a phenylpropanolamine.

7. The negative electrode for the rechargeable battery as claimed in any one of claims 1 to 6, wherein the protective layer has a thickness of 0.2 µm to 100 µm.

8. The negative electrode for the rechargeable battery as claimed in any one of claims 1 to 7, wherein the metal substrate includes aluminium.

9. The negative electrode for the rechargeable battery as claimed in claim 8, wherein the metal substrate further includes copper such that a pair of aluminium layers sandwich a copper layer therebetween.

10. The negative electrode for the rechargeable battery as claimed in claim 9, wherein the holes are in the pair of aluminium layers.

11. The negative electrode for the rechargeable battery as claimed in claim 10, wherein the holes extend completely through the pair of aluminium layers to expose the copper layer.

12. The negative electrode for the rechargeable battery as claimed in any one of claims 9 to 11, wherein a thickness of the copper layer is smaller than or equal to a thickness of each of the pair of aluminium layers.

13. A rechargeable battery, comprising:
the negative electrode as claimed in any one of claims 1 to 12; and
a positive electrode overlapping the negative electrode.

14. The rechargeable battery as claimed in claim 13, wherein the positive electrode includes:
an aluminium metal substrate, and
an active material layer on the aluminium metal substrate.

15. The rechargeable battery as claimed in claim 14, further comprising a separator between the negative electrode and the positive electrode.
